# EUROPÄISCHE PATENTSCHRIFT

(11) **EP 2 279 808 B1**
(45) Veröffentlichungstag und Bekanntmachung des Hinweises auf die Patenterteilung: **07.03.2012**
(21) Anmeldenummer: 10006486.4
(22) Anmeldetag: 22.06.2010
(51) Int. Cl.: B21D 28/22, H02K 15/02

(54) **Verfahren und Vorrichtung zum Herstellen von Rotor- und Statorblechen**
Method and apparatus for producing rotor and stator metal sheets
Procédé et dispositif de fabrication de tôles de rotor et de stator

(30) Priorität: 16.07.2009 AT 11262009
(43) Veröffentlichungstag der Anmeldung: 02.02.2011
(73) Patentinhaber: Andritz Technology and Asset Management GmbH, 8045 Graz (AT)
(72) Erfinder: Mössner, Bernd, 75203 Königsbach-Stein (DE)
(74) Vertreter: Schweinzer, Friedrich

(56) Entgegenhaltungen:
- DE-A1- 10 019 368
- DE-A1- 19 923 206
- US-A- 4 998 430
- US-A1- 2004 111 851

## Beschreibung

Die Erfindung betrifft ein Verfahren zum Herstellen von Rotor- und Statorblechen, bei dem Rotomuten, Statornuten und ein Schaftloch aus einem Blech geschnitten und das Rotorblech und das Statorblech durch Trennschnitte voneinander und vom Blech getrennt werden.

Die Erfindung betrifft des weiteren eine Vorrichtung zum Herstellen von Rotor- und Statorblechen mit Werkzeugen zum Schneiden von Rotomuten, Statomuten und einem Schaftloch aus einem Blech und zum Ausführen von Trennschnitten, um das Rotorblech und das Statorblech voneinander und vom Blech zu trennen, und mit einer Förderereinrichtung für das Blech.

Ein derartiges Verfahren und eine derartige Vorrichtung sind beispielsweise aus der DE-A 100 19 368 bekannt. Ein Nachteil der in der DE-A 100 19 368 beschriebenen Technologie liegt darin, dass bei der Herstellung der Statomuten gleichzeitig ein Rohling für das Rotorblech abgetrennt wird, der dann zu einer weiteren Bearbeitungsstation transportiert werden muss und dann erst in dieser fertig hergestellt werden kann.

Der Erfindung liegt daher die Aufgabe zu Grunde, ein Verfahren und eine Vorrichtung zu schaffen, bei der Rotor- und Statorbleche einfacher hergestellt werden können.

Gelöst wird diese Aufgabe bei einem Verfahren der eingangs genannten Art dadurch, dass zuerst die Rotomuten und das Schaftloch aus dem Blech geschnitten werden und dass anschließend die Statomuten aus dem Blech geschnitten und die Trennschnitte ausgeführt werden.

Bei einer Vorrichtung eingangs genannten Art wird diese Aufgabe dadurch gelöst, dass in Förderrichtung gesehen zuerst ein Werkzeug bzw. eine Werkzeugkombination zum Schneiden der Rotornuten und des Schaftlochs und anschließend ein Werkzeug bzw. eine Werkzeugkombination zum Schneiden der Statomuten und zum Ausführen der Trennschnitte angeordnet ist.

Der Vorteil des erfindungsgemäßen Verfahrens und der erfindungsgemäßen Vorrichtung liegt darin, dass das Rotorblech nach dem Schneiden der Rotomuten und des Schaftlochs noch immer am Statorblech bzw. an dem Blech hängt, aus dem das Rotorblech und das Statorblech herausgeschnitten werden. Anschließend ist nur ein einziger weiterer Positionierungsvorgang erforderlich, worauf die Statomuten geschnitten und das Rotorblech und das Statorblech vom Blech abgetrennt werden.

Grundsätzlich ist es bei der Erfindung bevorzugt, wenn die Rotomuten und das Schaftloch gleichzeitig aus dem Blech geschnitten werden und wenn die Statomuten gleichzeitig mit den Trennschnitten hergestellt werden. Dies ist insbesondere dann bevorzugt, wenn die Rotomuten, Statomuten, das Schaftloch und die Trennschnitte durch Stanzen hergestellt werden.

Alternativ ist es aber natürlich auch möglich, die einzelnen Schnitte beispielsweise mit Hilfe von Laserschneideinrichtungen oder Plasmaschneideinrichtungen herzustellen, wobei dann einzelne Schnitte unter Umständen nacheinander hergestellt werden.

Während es bei der Erfindung grundsätzlich möglich wäre, die Rotor- und Statorbleche aus einzelnen, kleineren oder größeren Blechtafeln zu schneiden, ist es bevorzugt, wenn die Rotor- und Statorbleche nacheinander aus in Längsrichtung gefördertem, länglichem Blech, insbesondere aus von Rollen abgezogenen Bandblech, geschnitten werden, da dies eine sehr rasche und rationelle Herstellung ermöglicht.

Besonders bevorzugt ist im Rahmen der Erfindung, wenn die Rotor- und Statorbleche in einer Zick-Zack-Anordnung aus dem Blech geschnitten werden, da dies eine optimale Materialnutzung ermöglicht.

Dabei ist bei der Erfindung bevorzugt, dass für das Schneiden der Rotomuten und das Schaftlochs einerseits und das Schneiden der Statomuten und das Ausführen der Trennschnitte andererseits jeweils ein Werkzeug bzw. eine Werkzeugkombination verwendet wird und das Blech in einer Zick-Zack-Bewegung unter den Werkzeugen bzw. den Werkzeugkombinationen durch bewegt wird. Alternativ könnten natürlich auch die Werkzeuge quer zur Förderrichtung des Blechs bewegt werden.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung eines bevorzugten Ausführungsbeispiels der Erfindung mit Bezug auf die angeschlossene Zeichnung.

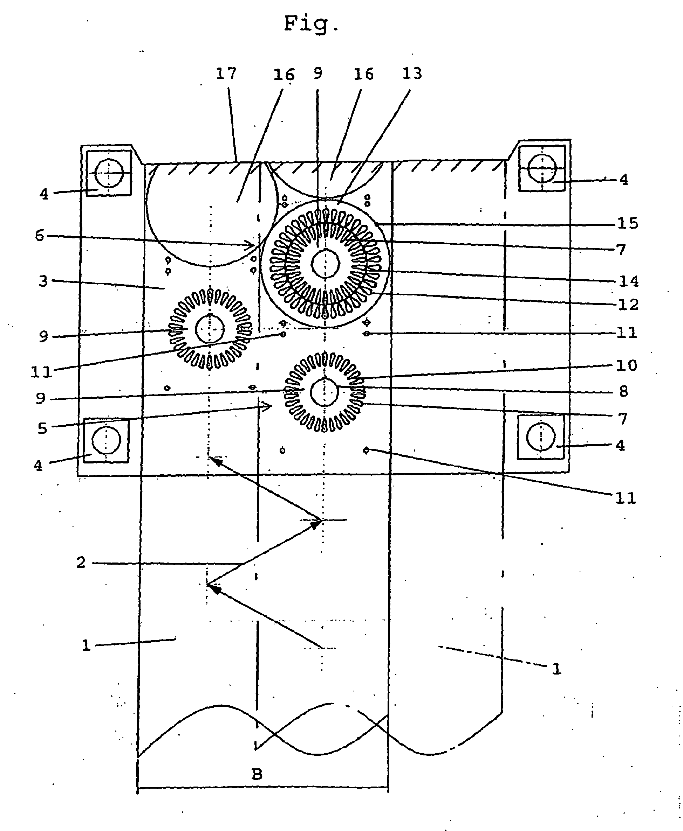

In der in der Zeichnung dargestellten Ausführungsform der Erfindung wird ein Bandblech 1 entlang einer durch die Pfeile 2 dargestellten Zick-Zack-Bewegung unter einer Trägerplatte 3 für nicht dargestellte Werkzeuge durchbewegt. Eine Förderereinrichtung für das Blech 1 ist nicht konkret dargestellt und besteht aus einem ersten Antrieb, welcher das Blech 1 in Längsrichtung fördert sowie einem zweiten Antrieb, welcher die Querbewegung des Blechs 1 bewerkstelligt. Die Trägerplatte 3 ist über Steher 4 mit einem Fundament verbunden. Die Steher 4 sind quer zur Bewegungsrichtung des Blechs 1 betrachtet so weit voneinander entfernt, dass das eine Breite B aufweisende Blech 1 (abgesehen von einer Bewegung in seiner Längsrichtung) von einer ersten, in durchgezogenen Linien dargestellten Stellung in eine zweite, in strichpunktierten Linien dargestellte Stellung hin und her bewegt werden kann.

An einer mit 5 bezeichneten Position befindet sich an der Trägerplatte 3 ein erstes, in der Zeichnung nicht konkret dargestelltes Werkzeug, mit dem Rotomuten 7 und ein Schaftloch 8 eines herzustellenden Rotorblechs 9 aus dem Blech 1 ausgestanzt werden. Durch die zwischen den Rotomuten 7 durchgehenden Verbindungsstege 10 ist das herzustellende Rotorblech 9 noch fest mit dem Blech 1 verbunden. Gleichzeitig mit der Herstellung der Rotomuten 7 und des Schaftlochs 8 können Suchlöcher 11 in das Blech 1 gestanzt werden.

Während an der mit 5 bezeichneten Position die Rotomuten 7 und das Schaftloch 8 gestanzt werden, werden gleichzeitig an der mit 6 bezeichneten Position durch ein zweites, nicht konkret dargestelltes Werkzeug Statomuten 12 eines herzustellenden Statorblechs 13 gestanzt sowie zwei Trennschnitte mit entsprechenden Stanzwerkzeugen durchgeführt, nämlich ein erster Trennschnitte 14, der das damit fertig gestellte Rotorblech 9 vom Statorblech 13 trennt und ein zweiter Trennschnitt 15, der das Statorblech 13 vom Blech 1 trennt.

Die Stanzwerkzeug für die Nuten 7,12 das Schaftloch 8 und die Trennschnitte 14, 15 können aus dem Stand der Technik an sich bekannte Werkzeuge sein, so dass sie hier nicht detailliert beschrieben werden.

Das Rotorblech 9 und das Statorblech 13 sind damit fertig gestellt und können entweder nach oben entnommen werden oder nach unten aus dem Blech 1 herausfallen. Übrig bleibt ein Rest von Blech 1 zwischen in der Zeichnung mit 16 bezeichneten Löchern, wobei das restliche Material des Blechs 1 an einer die Trägerplatte 3 abschließenden Schneidkante 17 in kleinere Stücke geschnitten wird. Durch die Zick-Zack-Bewegung 2 des Blechs 1 wird abwechselnd die linke und rechte Hälfte des Blechs 1, jeweils in Längsrichtung um etwas mehr als den halben Durchmesser des Statorblechs 13 (entspricht dem halben Durchmesser des Trennschnitts 15) versetzt, bearbeitet, so dass nur ein sehr geringer Materialverlust entsteht.

Die Rotorbleche 3 und Statorbleche 13 können gemäß der Erfindung in nur zwei Bearbeitungsvorgängen in einem kontinuierlichen Durchlauf des Blechs 1 durch die Vorrichtung hergestellt werden. Grundsätzlich wäre es aber auch möglich, die Rotomuten 9 und das Schaftloch 8 nicht in einem einzigen Stanzvorgang bzw. Bearbeitungsschritt sondern in zwei aufeinander folgenden Bearbeitungsschritten herzustellen. Dies gilt auch für die Herstellung der Statomuten 12 sowie der Trennschnitte 14 und 15. Dies erfordert dann zwar mehr als zwei Bearbeitungsvorgänge wie vorstehend beschrieben, aber es kann dadurch unter Umständen die Herstellung und Standzeit der Werkzeuge günstig beeinflusst werden.

## Patentansprüche

1. Verfahren zum Herstellen von Rotor- und Statorblechen (9,13), bei dem Rotomuten (7), Statomuten (12) und ein Schaftloch (8) aus einem Blech (1) geschnitten und das Rotorblech (9) und das Statorblech (13) durch Trennschnitte (14, 15) voneinander und vom Blech (1) getrennt werden, **dadurch gekennzeichnet, dass** zuerst die Rotomuten (7) und das Schaftloch (8) aus dem Blech (1) geschnitten werden und dass anschließend die Statomuten (12) aus dem Blech (1) geschnitten und die Trennschnitte (14, 15) ausgeführt werden.

2. Verfahren nach Anspruch 1, **dadurch gekennzeichnet, dass** die Rotomuten (7) und das Schaftloch (8) gleichzeitig aus dem Blech (1) geschnitten werden.

3. Verfahren nach Anspruch 1 oder 2, **dadurch gekennzeichnet, dass** die Statomuten (12) gleichzeitig mit den Trennschnitten (14, 15) hergestellt werden.

4. Verfahren nach einem der Ansprüche 1 bis 3, **dadurch gekennzeichnet, dass** die Rotomuten (7), Statomuten (12), das Schaftloch (8) und die Trennschnitte (14,15) durch Stanzen hergestellt werden.

5. Verfahren nach einem der Ansprüche 1 bis 4, **dadurch gekennzeichnet, dass** die Rotor- und Statorbleche (9, 13) nacheinander aus in Längsrichtung gefördertem, länglichem Blech (1), insbesondere aus von Rollen abgezogenem Bandblech, geschnitten werden.

6. Verfahren nach Anspruch 5, **dadurch gekennzeichnet, dass** das Band in einer Zick-Zack-Bewegung geführt wird und die Rotor- und Statorbleche (9, 13) in einer Zick-Zack-Anordnung aus dem Blech (1) geschnitten werden.

7. Verfahren nach Anspruch 6, **dadurch gekennzeichnet, dass** für das Schneiden der Rotomuten (7) und das Schaftloch (8) einerseits und das Schneiden der Statomuten (12) und das Ausführen der Trennschnitte (14, 15) andererseits jeweils ein Werkzeug bzw. eine Werkzeugkombination (5, 6) verwendet wird und das Blech (1) in einer Zick-Zack-Bewegung (2) unter den Werkzeugen bzw. den Werkzeugkombinationew (5, 6) durch bewegt wird.

8. Vorrichtung zum Herstellen von Rotor- und Statorblechen (9, 13) mit Werkzeugen (5, 6) zum Schneiden von Rotomuten (7), Statomuten (12) und einem Schaftloch (8) aus einem Blech (1) und zum Ausführen von Trennschnitten (14,15), um das Rotorblech (9) und das Statorblech (13) voneinander und vom Blech (1) zu trennen, und mit einer Förderereinrichtung für das Blech (1), **dadurch gekennzeichnet, dass** in Förderrichtung gesehen zuerst ein Werkzeug bzw. eine Werkzeugkombination (5) zum Schneiden der Rotomuten (7) und des Schaftlochs (8) und anschließend ein Werkzeug bzw. eine Werkzeugkombination (6) zum Schneiden der Statomuten (12) und zum Ausführen der Trennschnitte (14, 15) angeordnet ist.

9. Vorrichtung nach Anspruch 8, **dadurch gekennzeichnet, dass** die Werkzeuge bzw. Werkzeugkombinationen (5, 6) Stanzwerkzeug sind.

10. Vorrichtung nach Anspruch 8 oder 9, **dadurch gekennzeichnet, dass** die Förderereinrichtung zum Fördern von länglichem Blech (1), insbesondere von Rollen abgezogenem Bandblech, einen ersten Antrieb zur Förderung in Längsrichtung und einen zweiten Antrieb für die Querbewegung des Blechs aufweist.

## Claims

1. Process for manufacturing rotor and stator plates (9, 13) in which rotor grooves (7), stator grooves (12) and a shaft hole (8) are cut from a metal plate (1), and the rotor plate (9) and the stator plate (13) are separated from one another and from the metal plate (1) by means of separating cuts (14, 15), **characterised by** the rotor grooves (7) and the shaft hole (8) being cut from the metal plate (1) first of all, and the stator grooves (12) then being cut from the metal plate (1) and the separating cuts (14, 15) being made.

2. Process according to Claim 1, **characterised by** the rotor grooves (7) and the shaft hole (8) being cut from the metal plate (1) at the same time.

3. Process according to Claim 1 or 2, **characterised by** the stator grooves (12) being cut at the same time as the separating cuts (14, 15) are made.

4. Process according to one of Claims 1 to 3, **characterised by** the rotor grooves (7), stator grooves (12), the shaft hole (8) and the separating cuts (14, 15) being formed by punching.

5. Process according to one of Claims 1 to 4, **characterised by** the rotor and stator plates (9, 13) being cut one after the other from oblong metal plate (1) that is conveyed in longitudinal direction, particularly from metal strip taken from rolls.

6. Process according to Claim 5, **characterised by** the strip running in a zigzag path and the rotor and stator plates (9, 13) being cut from the metal plate (1) in a zigzag path.

7. Process according to Claim 6, **characterised by** one tool or combination of tools (5, 6), respectively, each being used for cutting the rotor grooves (7) and the shaft hole (8) on the one hand and for cutting the stator grooves (12) and making the separating cuts (14, 15) on the other hand, and by the metal plate (1) moving in a zigzag path (2) underneath the tools or combination of tools (5, 6), respectively.

8. Device for manufacturing rotor and stator plates (9, 13), with tools (5, 6) for cutting rotor grooves (7), stator grooves (12) and a shaft hole (8) from a metal plate (1) and for making separating cuts (14, 15) in order to separate the rotor plate (9) and the stator plate (13) from one another and from the metal plate (1), and also with a conveying device for the metal plate (1), **characterised by** a tool or a combination of tools (5) for cutting the rotor grooves (7) and the shaft hole (8) being mounted first, viewed in conveying direction, and being followed by a tool or a combination of tools (6) for cutting the stator grooves (12) and making the separating cuts (14, 15).

9. Device according to Claim 8, **characterised by** the tools or combinations of tools (5, 6) being punching tools.

10. Device according to Claim 8 or 9, **characterised by** the conveying device for metal plate (1), particularly strip taken from rolls, having a first drive that conveys the metal plate (1) in longitudinal direction and a second drive that effects the traversing movement.

## Revendications

1. Procédé de fabrication de tôles rotor et stator (9, 13), dans lequel des rainures rotor (7), des rainures stator (12) et un trou de tige (8) sont découpés à partir d'une tôle (1) et la tôle rotor (9) et celle stator (13) sont séparées l'une de l'autre et de la tôle (1) par des coupes cisaillées (14, 15), **caractérisé en ce que** d'abord les rainures rotor (7) et le trou de tige (8) sont découpés de la tôle (1) et puis les rainures stator (12) sont découpés de la tôle (1) et les coupes cisaillées (14, 15) sont effectuées.

2. Procédé selon la revendication 1, **caractérisé en ce que** les rainures rotor (7) et le trou de tige (8) sont découpés de la tôle (1) en même temps.

3. Procédé selon la revendication 1 ou 2, **caractérisé en ce que** les rainures stator (12) se font en même temps que les coupes cisaillées (14, 15).

4. Procédé selon l'une des revendications 1 à 3, **caractérisé en ce que** les rainures rotor (7), les rainures stator (12), le trou de tige (8) et les coupes cisaillées (14, 15) se font par poinçonnage.

5. Procédé selon l'une des revendications 1 à 4, **caractérisé en ce que** les tôles rotor et stator (9, 13) sont coupées l'une après l'autre d'une tôle (1) longitudinale avancée en direction longitudinale, notamment d'un ruban métallique défilant de rouleaux.

6. Procédé selon la revendication 5, **caractérisé en ce que** le ruban est mené dans un mouvement zigzag et que les tôles rotor et stator (9, 13) sont coupées de la tôle (1) dans une disposition zigzag.

7. Procédé selon la revendication 6, **caractérisé en ce que**, pour le découpage des rainures rotor (7) et du trou de tige (8) d'une part et pour découper des rainures stator (12) et effectuer les coupes cisaillées (14, 15) de l'autre, un outil ou une combinaison d'outils (5, 6) est utilisé(e) et la tôle (1) est menée dans un mouvement zigzag (2) au-dessous des outils ou de la combinaison d'outils (14, 15).

8. Dispositif de fabrication de tôles rotor et stator (9, 13) avec des outils (5,6) de découpage de rainures rotor (7), rainures stator (12) et d'un trou de tige (8) à partir d'une tôle (1) et pour effectuer des coupes cisaillées (14,15), pour séparer la tôle rotor (9) et celle stator (13) l'un de l'autre et de la tôle (1), et avec un dispositif d'avancement de la tôle (1), **caractérisé en ce que**, en sens d'avancement, un outil ou une combinaison d'outils (5) de découpage des rainures rotor (7) et du trou de tige (8) se trouve disposé(e) en premier, suivi d'un outil ou d'une combinaison d'outils (6) de découpage des rainures stator (12) et pour effectuer les coupes cisaillées (14, 15).

9. Dispositif selon la revendication 8, **caractérisé en ce que** l'outil ou la combinaison d'outils (5, 6) est/sont des outils de poinçonnage.

10. Dispositif selon la revendication 8 ou 9, **caractérisé en ce que** le dispositif d'avancement d'une tôle longitudinale (1), notamment d'un ruban métallique défilant des rouleaux, comporte une première commande pour l'avancement en sens longitudinal et une deuxième commande pour le mouvement transversal de la tôle.
